# EUROPÄISCHE PATENTANMELDUNG

(11) **EP 0 868 064 A1**
(43) Veröffentlichungstag der Anmeldung: **30.09.1998**
(21) Anmeldenummer: 98100790.9
(22) Anmeldetag: 19.01.1998
(51) Int. Cl.: H04M 1/60

(54) **Mobilfunktelefon**

(30) Priorität: 25.03.1997 DE 19712412
(71) Anmelder: Deutsche Telekom AG, 53113 Bonn (DE)
(72) Erfinder: Schwedes, Meike, 64289 Darmstadt (DE); Lasche, Rainer, 40855 Ratingen (DE); Nordholz, Günter, 30855 Langenhagen (DE); Helzle-Götting, Christel, 52134 Herzogenrath (DE); Ludwig, Michael, 51143 Köln (DE); Rothan, Thomas, 31224 Peine (DE)

(57) **Zusammenfassung**

Die Erfindung geht von einem Mobilfunktelefon aus, das eine integrierte Sprech- und Höreinrichtung aufweist.

Ein solches Mobilfunkgerät weist den Nachteil auf, daß bei dessen Betrieb die volle Sendeleistung unmittelbar am Kopf des Anwenders freigesetzt wird. Dies kann, wie aus diversen Untersuchungen bekannt ist, auf Dauer zu gesundheitlichen Beeinträchtigungen führen. Ein weiterer Nachteil besteht darin, daß beim Telefonieren mit dem Mobilfunktelefon aufgrund einer fehlenden Freisprecheinrichtung ständig eine Hand des Anwenders belegt ist.

Diese Nachteile vermeidet ein Mobilfunkgerät (1), mit dem eine Sprech- und Höreinrichtung extern verbindbar ist.

## Beschreibung

Die Erfindung betrifft ein Mobilfunktelefon.

Mobilfunktelefone, auch Handy genannt, sind allgemein bekannt. Unabhängig von den einzelnen Leistungsmerkmalen, die den Anwendern von Mobilfunktelefonen mit diesen zur Verfügung gestellt werden, ist allen heute erhältlichen Mobilfunktelefonen gemeinsam, daß sie von den einzelnen Anbieterfirmen als Kompaktgeräte hergestellt sind. Diese Kompaktgeräte umfassen dabei alle vom Anwender für einen funktionsgerechten Betrieb des Mobilfunktelefons notwendigen Einzelkomponenten. Diese Einzelkomponenten setzen sich insbesondere aus einer Sende- und Empfangseinrichtung, einer Sprech- und Höreinrichtung und der eigentlichen Bedienereinrichtung, welche herkömmlicherweise ein Tastenfeld und ein Display umfaßt, zusammen.

Diese Kompaktgeräte weisen daher den Nachteil auf, daß bei Betrieb des Mobilfunktelefons die volle Sendeleistung unmittelbar am Kopf des Anwenders freigesetzt wird. Dies kann, wie aus diversen Untersuchungen bekannt ist, auf Dauer zu gesundheitlichen Beeinträchtigungen führen, wobei sich insbesondere Anwender, die aus geschäftlichen Gründen häufig auf ihr Mobilfunktelefon angewiesen sind, diesen erhöhten gesundheitlichen Risiken aussetzen müssen. Ein weiterer, mit diesen Kompaktgeräten verbundener Nachteil besteht darin, daß beim Telefonieren mit dem Mobilfunktelefon aufgrund einer fehlenden Freisprecheinrichtung ständig eine Hand des Anwenders belegt und dieser somit in seiner Flexibilität und Bewegungsfreiheit während des Telefonierens eingeschränkt ist.

Die Aufgabe der Erfindung besteht darin, ein Mobilfunktelefon der gattungsbildenden Art bereitzustellen, welches die eingangs beschriebenen Gesundheitsrisiken des Anwenders beim Telefonieren minimiert und parallel dazu dessen Bewegungsfreiheit bei Nutzung des Mobilfunktelefons weitgehend uneingeschränkt gewährleistet.

Die erfindungsgemäße Aufgabe wird auf höchst überraschende Weise bereits durch ein Mobilfunktelefon mit den Merkmalen des Anspruchs 1 gelöst.

Vorteilhafte und bevorzugte Ausgestaltungen eines solchen Mobilfunktelefons sind in den Unteransprüchen 2 bis 9 aufgeführt.

Durch Bereitstellen eines Mobilfunktelefons, bei dem eine Sprech- und Höreinrichtung extern mit dem Mobilfunktelefon verbindbar sind, wird gewährleistet, daß die zum Aufbauen und Halten einer Funkverbindung notwendige Sendeleistung bei Nutzung des Mobilfunktelefons in ausreichender Entfernung zum Kopf des Anwenders abgegeben werden kann, wobei durch die räumliche Trennung der Sprech- und Höreinrichtung und des eigentlichen Mobilfunktelefons eine verbesserte Bewegungsfreiheit des Anwenders ermöglicht wird. Infolge dieser räumlichen Trennung ist es darüber hinaus möglich, das eigentliche Mobilfunktelefon wesentlich kleiner und leichter als bisher bereitzustellen, jedoch sei darauf hingewiesen, daß sich eine wie bei den herkömmlichen Kompaktgeräten integrierte Sprech- und Höreinrichtung und eine extern an das Mobilfunktelefon anschaltbare Sprech- und Höreinrichtung nicht gegenseitig ausschließen.

Bei einer bevorzugten Ausführungsform sind die Sprech- und Höreinrichtung über einen drahtgebundenen Steckkontakt am Mobilfunktelefon anschaltbar, wodurch eine technisch einfache Realisierbarkeit ermöglicht wird, so daß die Sprech- und Höreinrichtung beispielsweise auch als Zu- bzw. Nachrüstteil handelbar ist.

Bei Bereitstellung der externen Sprech- und Höreinrichtung mit jeweils einer eigenen Sende- bzw. Empfangseinrichtung zur wechselseitigen Informationsübertragung zwischen der Sprech- und Höreinrichtung und dem Mobilfunktelefon wird infolge der nicht mehr benötigten drahtgebundenen Anschaltung die Bewegungsfreiheit des Anwenders weiter erhöht. Zur Informationsübertragung zwischen der Sprech- und Höreinrichtung und dem Mobilfunktelefon sind in einer bevorzugten Ausgestaltung Infrarotsignale vorgesehen, mit denen sich auch größere Reichweiten überbrücken lassen, so daß der Anwender nicht gezwungen ist, bei Nutzung des Mobilfunktelefons dieses unmittelbar bei sich haben zu müssen.

Als vorteilhaft hat sich ferner der Einsatz von Funksignalen zur Informationsübertragung zwischen der Sprech- und Höreinrichtung und dem Mobilfunktelefon erwiesen, wodurch die absolute Bewegungsfreiheit des Anwenders innerhalb der Reichweite der Funkverbindung sichergestellt ist. Da sich die Sende- und Empfangsleistung der Sprech- bzw. Höreinrichtung bei einer bereitgestellen Reichweite von ungefähr fünf Metern im Milliwattbereich und somit unterhalb eines herkömmlichen schnurlosen Telefons liegen, ist auch bei dieser vorteilhaften Weiterbildung die Herabsetzung des latent vorhandenen Gesundheitsrisikos gewährleistet.

Vorteilhafterweise werden die Sprech- und Höreinrichtung für alle Variationen anwenderspezifisch entweder in getrennten Einheiten oder in einer einzigen Einheit bereitgestellt.

Eine bevorzugte Ausgestaltung der Sprech- und Höreinrichtung umfaßt einen Kopfhörer, der bereits heute mit den vorgenannten Möglichkeiten der Informationsübertragung am Markt erhältlich ist und somit in Verbindung mit einer Sprechzeuggarnitur eine preisgünstige Alternative einer externen, an das Mobilfunktelefon anschaltbaren Sprech- und Höreinrichtung darstellt. Vorgesehen ist ferner, die Sprech- und Höreinrichtung integriert in einer Brille bereitzustellen, wobei sich eine solche, ausgestattet mit einem Miniaturlautsprecher und -mikrofon, im wesentlichen nicht von herkömmlichen Brillen unterscheidet und somit insbesondere für Brillenträger als Standard- oder Designermodell je nach Wunsch bereitgestellt wird.

Die Erfindung erfaßt vielfältige weitere Ausgestaltungen von extern anschaltbaren Sprech- und Höreinrichtungen, wie beispielsweise in Armbanduhrenkonstruktionen eingebaute Mikrofone oder Lautsprecher, die in einem Ohrstecker oder Ohrring integriert sind.

Den vorgenannten Varianten einer Sprech- und Höreinrichtung ist gemeinsam, daß die Sprachverständlichkeit bei Hintergrundgeräuschen wesentlich verbessert wird, da diese wegen der besseren Richtcharakteristik der Mikrofone nicht wie bei Freisprecheinrichtungen mit übertragen werden. Ferner wird gewährleistet, daß ein direkt am Ohr angeordneter Hörer bzw. Lautsprecher das Eindringen von Nebengeräuschen verhindert.

Die Erfindung wird nachfolgend anhand einer bevorzugten Ausführungsform detaillierter beschrieben.

Es zeigen:
- Fig. 1: schematisch eine Vorderansicht eines Mobilfunktelefons und
- Fig. 2: schematisch eine Ansicht einer erfindungsgemäßen extern an das Mobilfunktelefon der Fig. 1 anschaltbaren Sprech- und Höreinrichtung.

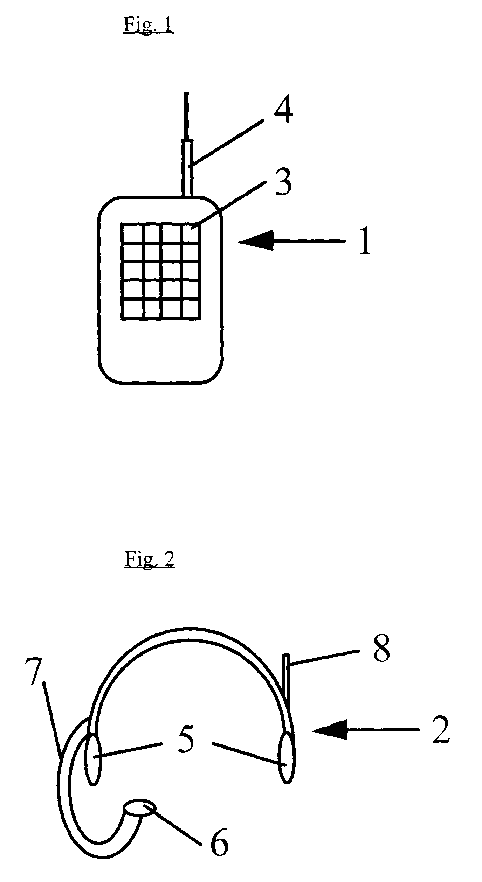

Nachfolgend wird auf die Fig. 1 und 2 Bezug genommen, in welchen ein Mobilfunktelefon 1, umfassend ein Sende- und Empfangsteil zur Bereitstellung einer Funkverbindung, bzw. ein extern an das Mobilfunktelefon 1 anschaltbarer Kopfhörer 2 dargestellt sind. Aus Anschaulichkeitsgründen ist das Mobilfunktelefon 1 nur mit einem Tastenfeld 3 und einer Sende- und Empfangsantenne 4 dargestellt, wobei das Mobilfunktelefon 1 mit weiteren nicht dargestellten, jedoch heutzutage erhältlichen Leistungsmerkmalen ausgestattet sein kann. Auch wenn das in Fig. 1 dargestellte Mobilfunktelefon 1 keine integrierte Sprech- und Höreinrichtung aufweist, sei darauf hingewiesen, daß sich eine intern in das Mobilfunktelefon 1 integrierte und eine extern an das Mobilfunktelefon 1 anschaltbare Sprech- und Höreinrichtung nicht gegenseitig ausschließen.

Der Kopfhörer 2 umfaßt gemäß Fig. 2 zwei Lautsprecher 5 sowie ein Mikrofon 6, welches über einen Bügel 7, verstellbar am Kopfhörer 2, angeordnet ist. Ferner umfaßt der Kopfhörer 2 eine mit einem Sende- und Empfangsteil elektrisch verbundene Antenne 8 zum Aussenden und Empfangen von mit dem in dem Mobilfunktelefon 1 integrierten Sende- und Empfangsteil abgestimmten Funksignalen, um eine wechselseitige Informationsübertragung zwischen dem Mobilfunktelefon 1 und dem Kopfhörer 2 zu gewährleisten. Da zur Informationsübertragung maximale Reichweiten von ungefähr drei bis fünf Metern ausreichend sind und somit schon eine im Milliwattbereich liegende Sendeleistung genügt, kann das Sende- und Empfangsteil des Kopfhörers 2 sehr klein gehalten werden.

Es sei darauf hingewiesen, daß weitere Ausbildungsformen von extern an ein Mobilfunktelefon anschaltbaren Sprech- und Höreinrichtungen herstellbar sind, um das Gesundheitsrisiko des Anwenders eines Mobilfunktelefons bei Betrieb trotz der vom Mobilfunktelefon aufgebrachten Sendeleistung zur Aufrechterhaltung einer Telefonfunkverbindung wesentlich herabzusetzen und dem Anwender eine erhöhte Bewegungsfreiheit zu ermöglichen.

### Bezugszeichenliste:

- 1: Mobilfunktelefon
- 2: Kopfhörer
- 3: Tastenfeld
- 4: Sende- und Empfangsantenne
- 5: Lautsprecher
- 6: Mikrofon
- 7: Bügel
- 8: Antenne

## Patentansprüche

1. Mobilfunktelefon (1) mit Bedienereinrichtung, dadurch gekennzeichnet, daß
eine Sprech- und Höreinrichtung extern mit dem Mobilfunktelefon (1) verbindbar sind.

2. Mobilfunktelefon (1) nach Anspruch 1,
dadurch gekennzeichnet, daß
die Sprech- und Höreinrichtung über einen drahtgebundenen Steckkontakt am Mobilfunktelefon (1) anschaltbar sind.

3. Mobilfunktelefon (1) nach Anspruch 1,
dadurch gekennzeichnet, daß
die Sprech- und Höreinrichtung zur Informationsübertragung eine eigene Sende- und Empfangseinrichtung aufweisen.

4. Mobilfunktelefon (1) nach Anspruch 1 oder 3,
dadurch gekennzeichnet, daß
zur Informationsübertragung zwischen der Sprech- und Höreinrichtung und dem Mobilfunktelefon (1) Infrarotsignale vorgesehen sind.

5. Mobilfunktelefon (1) nach Anspruch 1 oder 3,
dadurch gekennzeichnet, daß
zur Informationsübertragung zwischen der Sprech- und Höreinrichtung und dem Mobilfunktelefon (1) Funksignale vorgesehen sind.

6. Mobilfunktelefon (1) nach einem der Ansprüche 1 bis 5,
dadurch gekennzeichnet, daß
die Sprech- und Höreinrichtung zusammen in einer Einheit bereitgestellt sind.

7. Mobilfunktelefon (1) nach einem der Ansprüche 1 bis 5,
dadurch gekennzeichnet, daß
die Sprech- und Höreinrichtung in zwei voneinander getrennten Einheiten bereitgestellt sind.

8. Mobilfunktelefon (1) nach einem der Ansprüche 1 bis 7,
dadurch gekennzeichnet, daß
die Sprech- und/oder Höreinrichtung einen Kopfhörer (2) umfaßt.

9. Mobilfunktelefon (1) nach einem der Ansprüche 1 bis 7,
dadurch gekennzeichnet, daß
die Sprech- und/oder Höreinrichtung in einer Brille integriert sind.

10. Mobilfunktelefon (1) nach einem der Ansprüche 1 bis 9,
dadurch gekennzeichnet, daß
das Mobilfunktelefon eine in dieses integrierte Sprech- und Höreinrichtung und eine Einrichtung zum Umschalten zwischen der integrierten und der externen Sprech- und Höreinrichtung umfaßt.
